# EUROPEAN PATENT APPLICATION

(11) **EP 4 445 978 A1**
(43) Date of publication of application: **16.10.2024**
(21) Application number: 23167420.1
(22) Date of filing: 11.04.2023
(51) Int. Cl.: B01D 3/00, B01D 3/06, C08F 6/00

(54) **A DEVOLATILIZATION APPARATUS COMPRISING DISTRIBUTORS COMPRISING A STATIC MIXER**

(71) Applicant: Sulzer Management AG, 8401 Winterthur (CH)
(72) Inventor: LUK, Ho Ting Harris, 8050 Zürich (CH); STREHLER, Adrian, 8207 Schaffhausen (CH)
(74) Representative: Henkel & Partner mbB

(57) **Abstract**

The present invention relates to a devolatilization apparatus for devolatilizing a composition comprising a volatile component, such as for devolatilizing a solid or liquid polymer composition comprising unreacted monomer, solvent and/or byproduct, wherein the devolatilization apparatus comprises an inlet for the composition to be devolatilized and a vessel comprising at least two distributors being spaced apart on top of each other, at least one outlet for devolatilized composition and at least one outlet for gas, wherein each of the at least two distributors comprises at least one static mixer.

## Description

The present invention relates to a devolatilization apparatus for devolatilizing a composition comprising a volatile component, such as for devolatilizing a solid or liquid polymer composition comprising unreacted monomer and solvent, to a plant for preparing a polymer comprising at least one such devolatilization apparatus as well as to a devolatilization method making use of such a devolatilization apparatus.

Devolatilization or degassing, respectively, denotes the controlled removal of gases and of other volatile substances, such as solvents or moisture, from solids and liquids. Devolatilization is commonly used to remove volatile components, which are mostly components having a comparable low molecular weight, such as residual monomers, solvents, reaction by-products and water, from polymers. This is necessary, in order to achieve a required purity of the respective polymer before its use by removing harmful and/or toxic components, by removing components negatively affecting the further processing of the polymer, such as its formability to articles, by removing components worsening the properties of the polymer, by removing components leading to an unpleasant smell of the polymer and/or by removing components being undesired for other reasons. Furthermore, the removal of monomers and solvent from a polymer composition allows to recover and potentially recycle the monomers and solvent in the process so as to increase the yield of the process as well as to reduce the quantity of waste.

In order to achieve a devolatilization, the component to be evaporated needs to have a higher partial pressure or higher thermodynamic activity, respectively, than the polymer. Moreover, the component to be evaporated needs to be able to diffuse through the polymer composition to the phase boundary. In particular in case of viscous polymers or polymer melts - and typically polymers and polymer melts are comparable viscous - the slow diffusion rate may be a speed limiting factor. Therefore, in order to accelerate the devolatilization, the composition being subjected to the devolatilization is usually devolatilized at an elevated temperature and/or devolatilized at a subatmospheric pressure, because both measurements increase the thermodynamic activity of the volatile component(s) and an increase of the temperature moreover decreases the viscosity of the polymer, thus improving the diffusion of the volatile component(s) within the polymer.

Several types of devolatilization apparatuses are known, such as static and dynamic devolatilization apparatuses. While a dynamic devolatilization apparatus comprises moving parts, such as blades, in order to maintain a high interfacial concentration gradient and in order to maintain a high diffusion rate of the volatile component(s) within the polymer, a static devolatilization apparatus does not comprise moving parts, but comprises internals, such as one or more trays and in particular perforated trays, so as to create a high specific surface of the composition to be devolatilized and to distribute the composition to be devolatilized over the whole cross-section of the devolatilization apparatus. However, dynamic devolatilization apparatuses are, on account of their moving parts, connected with drastic disadvantages, such as being costly, requiring during the operation a high amount of energy, requiring regular maintenance and having a comparable high leak rate.

Thus, static devolatilization apparatuses have in comparison to dynamic devolatilization apparatuses the advantages - due to the absence of moving parts - of less energy consumption, of less installation costs, of requiring less maintenance and of having a comparable low leak rate. Common types of static devolatilization apparatuses are flash devolatilization apparatuses and falling strand devolatilization apparatuses. Flash devolatilization apparatuses typically comprise a preheater, for example a heat exchanger, and a flash chamber. During the operation, the polymer composition to be devolatilized is firstly pumped to the heat exchanger, where it is heated up and optionally pressurized in order to decrease its viscosity, before it is then pumped from the heat exchanger into the top of the flash chamber, where the pressure is relieved and evaporation of the volatile component(s) occurs. Thereafter, the polymer composition falls downwardly through the flash chamber, during which a plurality of bubbles of the volatile component(s) is nucleated in the polymer composition. This results in a large amount of surface area for mass transfer and thus leads to a fast devolatilization. While the volatilized vapor phase is collected and condensed in a condenser, the residual polymer composition is collected at the bottom of the flash chamber and is removed via pumping. Falling strand devolatilization apparatuses operate similarly to flash devolatilization apparatuses, but comprise one or more perforated trays in order to create a high specific surface of the composition to be devolatilized, to distribute the composition to be devolatilized over the whole cross-section of the devolatilization apparatus, to form falling strands of the composition to be devolatilized, to promote the growth of bubbles of the volatile component(s) and to accelerate the diffusion process.

In order to be flexible concerning the kind of composition, such as polymer, to be devolatilized, a devolatilization apparatus shall be desirably suitable to be used for the devolatilization of a wide range of compositions and in particular for the devolatilization of compositions having a comparably high viscosity as well as for the devolatilization of compositions having a comparably low viscosity. Such a flexibility is required, because in industrial polymerization plants different product grades are produced, such as a polymer with varying molecular weight and/or with different polymer structures, such as linear, branched or cross-linked structure, and thus with varying viscosities in different subsequent production charges. An example therefore is the production of polycaprolactone, which is an emerging fossil-based, but biodegradable bioplastics being suitable for medical applications and as additive in polyurethane production. Different polymer grades, i.e. polycaprolactone with varying molecular weight and/or with different polymer structure, are produced in one polymerization plant in different subsequent batches. Thus, the devolatilization apparatus included in this polymerization plant should be able to process any of the produced batches, independently from the viscosity of the polymer melt, and should be able to provide the optimal residence time for devolatilizing the polymer melt to the desired degree. However, in order to prevent that the internals of the devolatilization apparatus block during the devolatilization of a composition having a high viscosity, for instance by clogging of openings of the internals by the high viscosity composition to be devolatilized, devolatilization apparatuses are usually designed for high viscosity compositions only. As a consequence thereof, usual devolatilization apparatuses are not at all optimized for devolatilizing compositions having a low viscosity, but they only insufficiently devolatilize low viscosity compositions.

Alternatively, a devolatilization apparatuses may be designed for devolatilizing low viscosity compositions only. However, in this case the devolatilization apparatuses cannot be used for devolatilizing high viscosity compositions.

In view of this, the object underlying the present invention is to provide a devolatilization apparatus for devolatilizing a composition comprising a volatile component, such as for devolatilizing a solid or liquid polymer composition comprising unreacted monomer, solvent and/or by-product, which allows to efficiently and with low operational costs devolatilize in a compact design not only high viscosity compositions, such as those having a dynamic viscosity of at least 1,000 Pa·s, but also low viscosity compositions, such as those having a dynamic viscosity of less than 1,000 Pa·s and in particular of less than 500 Pa·s, so that the devolatilization apparatus is scalable and may be used to devolatilize polymer melts, such as polycaprolactone polymer melts, for various grades of polymers, i.e. is variable concerning the structure and molecular weight of the polymer charge produced.

In accordance with the present invention, this object is satisfied by providing a devolatilization apparatus for devolatilizing a composition comprising a volatile component, such as for devolatilizing a solid or liquid polymer composition comprising unreacted monomer, solvent and/or by-product, wherein the devolatilization apparatus comprises an inlet for the composition to be devolatilized and a vessel comprising at least two distributors being spaced apart on top of each other, at least one outlet for devolatilized composition and at least one outlet for gas, wherein each of the at least two distributors comprises at least one static mixer.

By subdividing the vessel of the devolatilization apparatus into several, namely at least two sections each comprising a distributor, i.e. by subdividing the vessel of the devolatilization apparatus into at least two devolatilization sections, wherein each of the distributors comprises at least one static mixer, the devolatilization apparatus in accordance with the present invention comprises at least two different feeding points and distributors, which may be optimized for different polymer grades so as to allow to devolatilize high viscosity compositions as well as to devolatilize low viscosity compositions, i.e. different charges of polymer melts containing polymer with differing molecular weight and/or differing structure and thus differing viscosity. Thus, depending on the viscosity of the polymer, which is determined by the molecular weight, by the structure and by the monomer content of the polymer melt leaving the polymerization reactor, the devolatilization apparatus in accordance with the present invention allows to feed the polymer melt through one of the at least two different distributors, i.e. at one of the at least two different feeding points into an appropriate devolatilization section being appropriate and optimized for processing the polymer melt with the given viscosity and with the optimal residence time, so that the target polymer with the desired quality is achieved. In particular, the static mixer of each of the distributors allows to adjust the pressure drop of the respective distributor so that only polymer melt with a suitable viscosity enters the respective distributor. Thus, the static mixer of each distributor does not only mix the polymer melt before its devolatilization, but in fact controls, into which of the at least devolatilization sections the respective polymer melt to be devolatilized is fed depending on its viscosity. All in all, the devolatilization apparatus in accordance with the present invention allows to efficiently and with low operational costs devolatilize in a compact design not only high viscosity compositions, such as those having a dynamic viscosity of at least 1,000 Pa·s, but also low viscosity compositions, such as those having a dynamic viscosity of less than 1,000 Pa·s and in particular of less than 100 Pa·s, such as polycaprolactone polymer melts with differing polymer grades.

A distributor comprising at least one static mixer means that at least one static mixer is included within the distributor or is directly connected with the distributor, for instance with its upstream end, so that composition being processed in the mixer directly flows into the distributor. Preferably, at least one and more preferably each of the at least two distributors comprises at its upstream end an inlet for the composition to be devolatilized and at its downstream end an outlet for distributing the composition to be devolatilized into the vessel, wherein the at least one static mixer is arranged downstream of the inlet and upstream of the outlet. However, as set out above it is also possible that at least one static mixer is directly connected with the distributor, such as for example with the inlet of the distributor.

Good results are in particular obtained, when the at least one static mixer is arranged directly upstream of the upstream end or at or at least closely downstream of the upstream end of the respective distributor, since then the static mixer can allow or block the entry of the respective composition to be devolatilized into the respective distributor, before the composition enters the distributor. In view thereof, it is preferred that in at least one and more preferably in each of the at least two distributors a static mixer is arranged directly upstream of the inlet, directly downstream of the inlet or downstream of the inlet so that the distance between the inlet and the most upstream end of the static mixer is less than 20%, preferably less than 10%, more preferably less than 5% and most preferably less than 1% of the length of the distributor. Length of the distributor means in this connection the distance between the most upstream end and the most downstream end of the distributor.

It is thus preferred that in each of the at least two distributors a static mixer is arranged directly upstream of the inlet, directly downstream of the inlet or downstream of the inlet of the respective distributor so that the distance between the inlet and the most upstream end of the static mixer is not more than 10 cm, preferably not more than 5 cm and more preferably not more than 0.5 cm.

In accordance with the present invention, each of the at least two distributors comprises at least one static mixer. Static mixer means any mixer, which does not comprise any moving part and in particular does not comprise any rotating part. Static mixers usually produce a mixing effect by generating a turbulent flow due to static, i.e. non-moving elements, such as plates, bars, crossbars, baffles, helically formed deflection means, grids and the like. Suitable examples for static mixers, are x-type static mixers, spiral/helical-type static mixers, quattro-type static mixers, baffle plate-type static mixers, turbulator strips-type static mixers and any combination of two or more of the abovementioned mixer types. X-type static mixers comprise deflection means in the form of bars, crossbars, plates or the like having in a plan view and/or side view and/or cross-sectional view a x-like form. Such x-type static mixers are described for instance in WO 2010/066457 A1, EP 1 206 962 A1, EP 2 158 027 B1 and EP 0 655 275 B1 and are commercially available from Sulzer Chemtech Ltd, Winterthur, Switzerland under the tradenames SMX, SMXL and SMX plus as well as from Fluitec, Neftenbach, Switzerland under the tradename CSE-X. Spiral/helical-type static mixers have a helically formed deflection means and are described for instance in US 3,743,250 A, whereas quattro-type static mixers comprise deflection means forming chamber-like mixing sections and are described for instance in EP 2 548 634 B1 and in EP 0 815 929 B1. While baffle plate-type static mixers comprise usually longitudinal deflection means and are described for instance in EP 1 510 247 B1 and in US 4,093,188 A, turbulator strip-type static mixers comprise in a tube a plurality of elongated strips, each of which being formed by a series of alternating deflection panels successively joined together by for example substantially triangular bridging portions with the strips being held together and anchored substantially on the axis of the tube by alternate ones of the bridging portions and the other bridging sections being disposed adjacent the inner wall of the tube and are described for instance in US 4,296,779 A. Other suitable static mixers are distributed from Sulzer Chemtech AG under the tradenames CompaX, SMI, KVM, SMV and GVM and from Stamixco AG, Wollerau, Switzerland under the tradename GVM. In view of the above, it is preferred that at least one and more preferred that all of the at least one static mixer of the at least two distributors are selected from the group consisting of x-type static mixers, spiral/helical-type static mixers, quattro-type static mixers, baffle plate-type static mixers, turbulator strips-type static mixers and any combination of two or more of the abovementioned mixer types.

In order to easily distribute the composition to be devolatilized to and through the appropriate distributor, it is suggested in a further development of the idea of the present invention that the devolatilization apparatus further comprises a distribution line, which comprises at one of its ends the inlet for the composition to be devolatilized and which is further connected with each of the inlets of each of the at least two distributors. Thereby, the composition to be devolatilized may flow through the inlet into the distribution line, which may be a pipe, then through the distribution line along the inlets of the distributors so as to enter the distributor being appropriate for the composition actually fed through the distribution line. For instance, the distribution line may comprise at least two valves, wherein each of the inlets of the at least two distributors is connected with one of the at least two valves.

In accordance with the present invention, the devolatilization apparatus comprises a vessel comprising at least two distributors being spaced apart on top of each other. In accordance with a particular preferred embodiment of the present invention, each of the at least two distributors, which is arranged above another of the at least two distributors, has a higher pressure drop than the other distributor. In other words, the devolatilization apparatus is embodied so that low viscosity composition to be devolatilized is allowed to enter the uppermost or at least one of the upper distributors, whereas composition to be devolatilized having a higher viscosity may only enter one of the lower or even only the lowermost of the distributors, respectively.

A respective pressure drop distribution, i.e. that each of the at least two distributors, which is arranged above another of the at least two distributors, has a higher pressure drop than the other distributor, may be easily achieved by appropriately selecting the static mixers for the single distributors, namely preferably so that the at least one static mixer of a distributor being arranged above another distributor generates a higher pressure drop during the operation than the at least one static mixer of the other distributor being located below it.

A respective pressure drop distribution, i.e. that each of the at least two distributors, which is arranged above another of the at least two distributors, may also be achieved by differing the distributor cross-sectional area. Thus, in addition to the above embodiment using static mixers achieving different pressure drops during their operation or alternatively to the above embodiment using static mixers achieving different pressure drops during their operation, each of the at least two distributors being arranged above another distributor may have a smaller cross-sectional area (such as a smaller diameter in the case of a distributor having a circular cross-section) than the at least one other distributor being located below it. Good results are for instance achieved, when each of the at least two distributors is a pipe or comprises an upstream portion being a pipe, wherein the pipe of a distributor being arranged above another distributor has a cross-sectional area diameter being smaller than the pipe of the other distributor. The pipe or the portion being embodied as pipe may have any kind of cross-sectional form, such as a circular, square, rectangular, oval, elliptic or polygonal cross-sectional form. Preferably, the pipe or the portion being embodied as pipe has a circular cross-section. Most preferably, each of the at least two distributors is a pipe with a slanted downstream end.

In accordance with still another embodiment of the present invention, a respective pressure drop distribution, i.e. that each of the at least two distributors, which is arranged above another of the at least two distributors, may also be achieved by differing the distributor length of the single distributors. Consequently, in addition to the above embodiments using static mixers achieving different pressure drops during their operation and/or distributors having different cross-sectional areas or alternatively to the above embodiments using static mixers achieving different pressure drops during their operation and/or distributors having different cross-sectional areas, each of the at least two distributors being arranged above another distributor may be longer than the at least one other distributor being located below it. Good results are for instance achieved, when each of the at least two distributors is a pipe or comprises an upstream portion being a pipe, wherein the pipe of a distributor being arranged above another distributor is longer than the pipe of the other distributor. Again, the pipe or the portion being embodied as pipe may have any kind of cross-sectional form, such as a circular, square, rectangular, oval, elliptic or polygonal cross-sectional form. Preferably, the pipe or the portion being embodied as pipe has a circular cross-section. Most preferably, each of the at least two distributors is a pipe with a slanted downstream end.

In a further development of the idea of the present invention, it is proposed that each of the at least two distributors is arranged at least substantially horizontal in the vessel and extends from one end of the vessel over 20 to 80% of the width of the vessel. At least substantially horizontal means within the present invention that the angle between the longitudinal direction of the distributor and the horizontal plane is less than 20°, preferably less than 10°, more preferably less than 5°, still more preferably less than 1 ° and most preferably 0°. Good results are in particular achieved, when each of the at least two distributors is arranged at least substantially horizontal in the vessel and extends from one end of the vessel over 20 to 60% and more preferably 25 to 50% of the width of the vessel. Most preferably, each of the at least two distributors is arranged horizontal in the vessel.

Concerning the material, from which the at least two distributors are made, no particular restrictions exist, as long as the material is resistant to the composition to be devolatilized and mechanically stable. Also, it is preferred that the material of the distributors has a comparable good heat conductivity. Good results are in particular obtained, when each the distributors is made from stainless steel, carbon steel, hastelloy or the like.

In accordance with another preferred embodiment of the present invention, the at least two distributors may be heat able. For instance, each of the at least two distributors may have a bottom portion, being made of two plates, arranged with space, and on top of each other, wherein the cavity between both plates may be filled with heating medium so as to heat up the upper bottom plate to the optimal temperature.

The vessel of the devolatilization apparatus in accordance with the present invention is subdivided, seen in the vertical direction, into at least two devolatilization sections. As devolatilization section, any section is designated, which is formed between the top of a distributor and the top of the next lower distributor. Thus, each devolatilization section comprises one distributor.

In a further development of the idea of the present invention, it is suggested that each devolatilization section comprises at least one perforated tray or, in other words, that in each devolatilization section one distributor and at least one perforated tray is arranged.

Moreover, it is preferred that in the uppermost devolatilization section more perforated trays are arranged than in the one or more lower devolatilization sections. Thereby, it is achieved that the uppermost devolatilization section has a higher capacity than the devolatilization section(s) arranged below it. This contributes to a good scalability of the devolatilization apparatus.

Good results are in particular obtained, when in each devolatilization section being arranged above another devolatilization section more perforated trays are arranged than in the next lower devolatilization section.

In total, the vessel of the devolatilization apparatus in accordance with the present invention preferably comprises two to twenty, more preferably three to ten and still more preferably four to six distributors being arranged and spaced apart on top of each other.

In accordance with a particular preferred embodiment of the present invention, the number of trays per devolatilization section decreases from the uppermost to the lowermost of the devolatilization section. Good results are in particular obtained, when the vessel of the devolatilization apparatus in accordance with the present invention comprises three distributors and thus three devolatilization sections, namely a first devolatilization section between the top of the first uppermost distributor and the top of the second middle distributor, a second devolatilization section between the top of the second middle distributor and the top of the third lowermost distributor and a third devolatilization section between the top of the third lowermost distributor and the bottom of the vessel. It is preferred in this embodiment that three perforated trays are spaced apart and on top of each other in the first devolatilization section, whereas two perforated trays are spaced apart and on top of each other in the second devolatilization section and one perforated tray is arranged in the third devolatilization section.

The present invention is not particularly limited concerning the form and size of the perforated trays. Good results are for instance achieved, when at least one and more preferably all of the perforated trays have, seen in top view, a polygonal, a rectangular, a square, a circular, an oval or a trapezoidal form. However, it is preferred that at least one and more preferably all of the perforated trays have, seen in top view, a circular form.

Also concerning the material of the perforated trays, no particular restrictions exist, as long as the material is resistant to the composition to be devolatilized and mechanically stable. In addition, it is preferred that the material of the perforated trays has a comparable good heat conductivity. Good results are in particular obtained, when at least one and more preferably all of the perforated trays are made from stainless steel, carbon steel or the like.

The preferred thickness of the perforated trays depends on the mechanical stability of the material, from which it is made or they are made, respectively. Good results are for instance obtained, when the thickness of at least one and more preferably all of the perforated trays is each 2 to 20 mm and more preferably of 5 to 10 mm.

Furthermore, it is preferred that at least one and more preferably all of the perforated trays is/are arranged at least substantially horizontal in the vessel and extends at least substantially over the whole cross-section of the vessel. Extending at least substantially over the whole cross-section of the vessel means in this connection that at least one and more preferably all of the perforated trays extend(s) over at least 80%, preferably at least 90%, more preferably at least 95%, still more preferably at least 99% and most preferably over the whole cross-section of the vessel. Again, substantially horizontal means in this connection that the angle between the longitudinal direction of the perforated tray and the horizontal plane is less than 20°, preferably less than 10°, more preferably less than 5° and most preferably less than 1°. Most preferably each of the at least two trays is arranged horizontal in the vessel.

In a further development of the idea of the present invention, it is proposed that at least one weir is arranged at the outer edge(s) of each of the perforated trays, wherein the at least one weir extends from the surface of the respective perforated tray at least substantially vertically upwards. At least substantially vertically means that the angle between the at least one weir and the vertical direction is at most 10°, preferably at most 5°, more preferably at most 1° and most preferably 0°. Preferably, the at least one weir fluid-tightly surrounds the perforated tray so that no liquid contained on the surface of the perforated tray may flow outside of the perforated bottom element except as through the openings provided in the bottom of the perforated tray.

Good results are in particular obtained, when the height of the at least one weir is 1 to 1,000 cm, more preferably 10 to 1,000 cm and still more preferably 100 to 500 cm.

In accordance with the present invention, each of the perorated tray comprises a plurality of openings. The present invention is not particularly limited concerning the cross-sectional form of the openings of the perforated trays. For instance, some or preferably all of the openings of each of the perforated trays may have a polygonal, a rectangular, a square, a circular, an oval or a trapezoidal cross-sectional form. More preferably, at least some and most preferably all of the openings of each of the perforated trays have a circular cross-sectional form.

All of the openings of each of the perforated trays may each have the same form and same cross-sectional area or they may vary with respect to their form and/or cross-sectional area. In the case that all openings of each tray have each the same cross-sectional area, still the openings of one tray may have a different cross-sectional area than the openings of another tray.

Good results are in particular obtained, when each of the openings of a tray has at least substantially the same cross-sectional area. That means that the openings of any tray have at least substantially the same cross-sectional area, wherein the cross-sectional area of the openings of one tray may be different to the cross-sectional area of the openings of another tray. At least substantially the same cross-sectional area means that each of the openings of a tray has a cross-sectional area, which is 70 to 130%, preferably 80 to 120%, more preferably 90 to 110%, still more preferably 95 to 105% and most preferably the same as the average cross-sectional area of the openings of the respective tray. The average cross-sectional area of the openings of a tray is the sum of the cross-sectional areas of all openings of the respective tray divided by the total number of all openings of the respective tray.

In accordance with another preferred embodiment of the present invention, at least one and more preferably each perforated tray comprises a plurality of openings, wherein the average cross-sectional area of the openings of a tray being arranged in a devolatilization section being arranged above another devolatilization section is smaller than the average cross-sectional area of the openings of a tray being arranged in a lower devolatilization section.

In a further development of the idea of the present invention, it is proposed that the devolatilization apparatus does not comprise any back-pressure valve.

In accordance with a further aspect, the present invention relates to a plant for preparing a polymer comprising at least one polymerization reactor and connected with the outlet of at least one of the at least one polymerization reactor at least one above described devolatilization apparatus.

Preferably, at least one polymerization reactor is a plug-flow reactor.

The plant may comprise two or more reactors and one, two or more of the above described devolatilization apparatuses.

In accordance with still a further aspect, the present invention relates to a method for devolatilizing a composition comprising a volatile component comprising the steps of feeding the composition to be devolatilized into the inlet for the composition to be devolatilized of the above described devolatilization apparatus, of withdrawing gas from the outlet for gas, and of withdrawing devolatilized composition from the outlet for devolatilized composition.

Good results are in particular obtained, when the composition to be devolatilized is selected from the group consisting of polycaprolactones, polyolefin elastomers, polylactic acids, polyglycolic acids, polyolefins and mixtures or copolymers of two or more of the above polymers.

Subsequently, the present patent application is described by way of example with reference to advantageous embodiments and to the enclosed drawings.

There is shown:
- Fig. 1 a to c: shows a schematic longitudinal-sectional view of a devolatilization apparatus according to one embodiment of the present invention.
- Fig. 2a to e: show four different types of static mixers being useable in the devolatilization apparatus and in the method in accordance with the present invention.

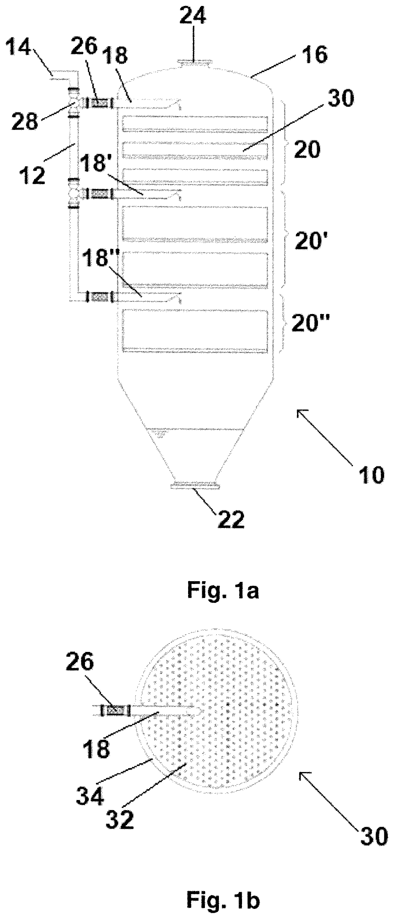

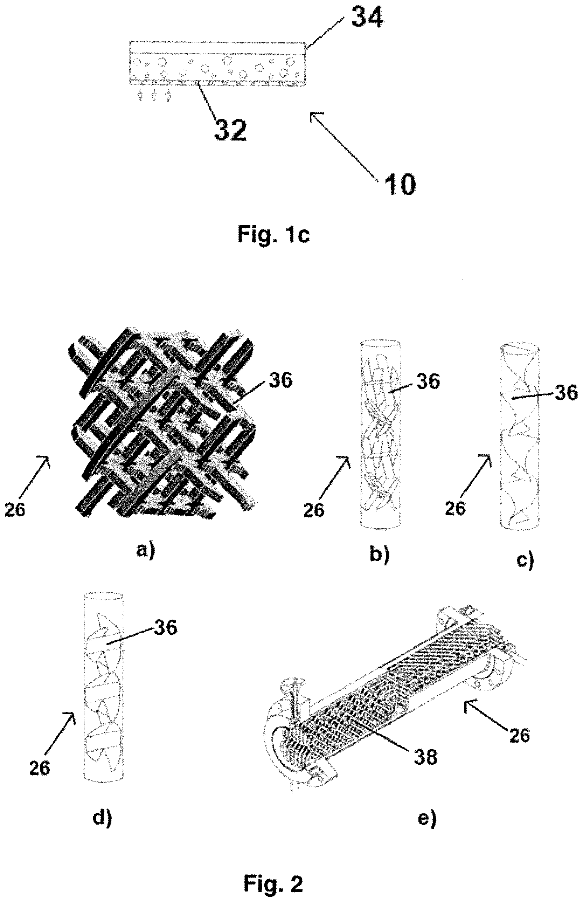

The devolatilization apparatus 10 shown in figure 1 for devolatilizing a composition comprising a volatile component, such as for devolatilizing a solid or liquid polymer composition comprising unreacted monomer, solvent and/or by-product, comprises a distribution line 12, which comprises at one end an inlet 14 for the composition to be devolatilized, and a vessel 16. The vessel 16 comprises three distributors 18, 18', 18", which are spaced apart and on top of each other. Thus, the vessel 16 comprises three devolatilization sections 20, 20', 20", namely a first devolatilization section 20 between the top of the uppermost distributor 18 and the top of the second distributor 18', a second devolatilization section 20' between the top of the second distributor 18' and the top of the lowermost distributor 18" and a third devolatilization section 20" between the top of the lowermost distributor 18" and the bottom of the vessel 16. In addition, the vessel 16 comprises an outlet 22 for devolatilized composition and an outlet 24 for gas. Each of the three distributors 18, 18', 18" is a pipe with an upstream end and a slanted downstream end, wherein at each of the upstream ends a static mixer 26 is arranged. Furthermore, the distribution line 12 comprises three valves 28, wherein each of the inlets of the three distributors 18, 18', 18" is connected with another one of the three valves 28. Below each of the distributors 18, 18', 18" at least one perforated tray 30 is arranged, namely below the uppermost distributor 18 three perforated trays 30 are arranged, below the second distributor 18' two perforated trays 30 are arranged and below the lowermost distributor 18" one perforated tray 30 is arranged. Each of the perforated trays 30 has, as in particular shown in figure 1b, a circular cross-section and comprises a plurality of circular openings 32. The circumference of each perforated tray 30 comprises a vertically extending weir 34.

During the operation of the devolatilization apparatus 10, the composition to be devolatilized is fed via the inlet 14 for the composition to be devolatilized into the distribution line 12 and from there via one of the valves 28 into one of the distributors 18, 18', 18". More specifically, any of the distributors 18, 18', 18" has due to the nature of the applied static mixer 26, the length and the cross-sectional area of the distributor 18, 18', 18" a specific pressure drop, namely the highest pressure drop in the uppermost distributor 18 and the lowest pressure drop in the lowermost distributor 18". On account of this reason, low viscosity polymer melt enters the uppermost distributor 18, whereas middle viscosity melt enters the middle distributor 18' and high viscosity polymer melt enters the lowermost distributor 18". From the respective distributor 18, 18', 18", the polymer melt flows onto the next lower perforated tray 30, is distributed thereon over the whole cross-section of the perforated tray and flows through the openings 32 onto the next lower perforated tray 30 or onto the bottom of the vessel 16, respectively. The devolatilized polymer is withdrawn from the vessel 16 via the outlet 22, whereas the separated gas is withdrawn from the vessel 16 via the outlet 24.

Fig. 2 shows five different types of static mixers useable in the devolatilization apparatus and in the method in accordance with the present invention, namely in Fig. 2a a static mixer 26 of the x-type comprising deflection means 36 in the form of crossbars having in a plan view as well as in a side view the x-like form. Fig. 2b shows a static mixer 26 of the baffle plate-type comprising longitudinal deflection means 36, whereas Fig. 2c and 2d show static mixers 26 with curved deflection means 36. Fig. 2e shows a combined static mixer 26 and heat transfer element comprising tube-like heat transfer elements 38 for transporting heat transfer medium within the tubes, which also functions as deflection means for liquid being transported outside of the tube-like heat transfer elements, such as it is commercially distributed by Sulzer Chemtech Ltd under the tradename SMR.

### Reference Numeral List

- 10: Devolatilization apparatus
- 12: Distribution line
- 14: Inlet for the composition to be devolatilized
- 16: Vessel
- 18, 18', 18": Distributor
- 20, 20', 20": Devolatilization section
- 22: Outlet for devolatilized composition
- 24: Outlet for gas
- 26: Static mixer
- 28: Valve
- 30: Perforated tray
- 32: Opening of a tray
- 34: Weir
- 36: Deflection means of the static mixer
- 38: Heat transfer element of the static mixer

## Claims

1. A devolatilization apparatus for devolatilizing a composition comprising a volatile component, such as for devolatilizing a solid or liquid polymer composition comprising unreacted monomer, solvent and/or by-product, wherein the devolatilization apparatus comprises an inlet for the composition to be devolatilized and a vessel comprising at least two distributors being arranged spaced apart on top of each other, at least one outlet for devolatilized composition and at least one outlet for gas, wherein each of the at least two distributors comprises at least one static mixer.

2. The devolatilization apparatus in accordance with claim 1, wherein each of the at least two distributors comprises at its upstream end an inlet and at its downstream end an outlet, wherein the at least one static mixer is arranged directly upstream of the inlet or downstream of the inlet but upstream of the outlet.

3. The devolatilization apparatus in accordance with claim 1 or 2, wherein in each of the at least two distributors a static mixer is arranged directly upstream of the inlet, directly downstream of the inlet, or downstream of the inlet so that the distance between the inlet and the most upstream end of the static mixer is less than 20%, preferably less than 10%, more preferably less than 5% and most preferably less than 1 % of the length of the distributor.

4. The devolatilization apparatus in accordance with any of the preceding claims, wherein in each of the at least two distributors a static mixer is arranged directly upstream of the inlet, directly downstream of the inlet or downstream of the inlet so that the distance between the inlet and the most upstream end of the static mixer is not more than 10 cm, preferably not more than 5 cm and more preferably not more than 0.5 cm.

5. The devolatilization apparatus in accordance with any of the preceding claims, wherein at least one and preferably all of the at least one static mixer is selected from the group consisting of x-type static mixers, spiral/helical-type static mixers, quattro-type static mixers, baffle plate-type static mixers, turbulator strips-type static mixers and any combination of two or more of the above mentioned mixer types.

6. The devolatilization apparatus in accordance with any of the preceding claims, which further comprises a distribution line, which comprises at one end the inlet for the composition to be devolatilized and which is further connected with each of the inlets of each of the at least two distributors, wherein preferably the distribution line comprises at least two valves, wherein each of the inlets of the at least two distributors is connected with one of the at least two valves.

7. The devolatilization apparatus in accordance with any of the preceding claims, wherein each of the at least two distributors, which is arranged above another of the at least two distributors, has a higher pressure drop than the other distributor.

8. The devolatilization apparatus in accordance with claim 7, wherein the at least one static mixer of a distributor being arranged above another distributor generates a higher pressure drop than the at least one static mixer of the other distributor.

9. The devolatilization apparatus in accordance with any of the preceding claims, wherein each of the at least two distributors is a pipe or comprises an upstream portion being a pipe, wherein the pipe of a distributor being arranged above another distributor has a smaller cross-sectional area than the pipe of the other distributor, and/or wherein the pipe of a distributor being arranged above another distributor is longer than the pipe of the other distributor.

10. The devolatilization apparatus in accordance with any of the preceding claims, wherein in at least one and preferably in each devolatilization section being a section between the top of a distributor and the top of the next lower distributor or a section between the top of the lowermost distributor and the bottom of the vessel, one distributor and at least one perforated tray is arranged, wherein preferably in the uppermost devolatilization section more perforated trays are arranged than in the one or more lower devolatilization sections.

11. The devolatilization apparatus in accordance with any of the preceding claims, wherein the vessel comprises three distributors and thus three devolatilization sections, a first one between the top of the first uppermost distributor and the top of the second middle distributor, a second one between the top of the second middle distributor and the top of the third lowermost distributor and a third one between the top of the third lowermost distributor and the bottom of the vessel, wherein in the first devolatilization section three perforated trays being arranged spaced apart and on top of each other are arranged, in the second devolatilization section two perforated trays being arranged spaced apart and on top of each other are arranged and in the third devolatilization section one perforated tray is arranged.

12. The devolatilization apparatus in accordance with claims 10 or 11, wherein each perforated tray comprises a plurality of openings, wherein each of the openings of a tray has at least substantially the same cross-sectional area, wherein at least substantially the same cross-sectional area means that each opening has a cross-sectional area which is 70 to 130%, preferably 80 to 120%, more preferably 90 to 110%, still more preferably 95 to 105% and most preferably the same as the average cross-sectional area of the openings of the respective tray, wherein the average cross-sectional area of the openings of a tray being arranged in a devolatilization section, which is a section between the top of a distributor and the top of the next lower distributor or a section between the top of the lowermost distributor and the bottom of the vessel, being arranged above another devolatilization section is smaller than the average cross-sectional area of the openings of a tray being arranged in a lower devolatilization section.

13. A plant for preparing a polymer comprising at least one polymerization reactor and connected with the outlet of at least one of the at least one polymerization reactor at least one devolatilization apparatus in accordance with any of the preceding claims.

14. A method for devolatilizing a composition comprising a volatile component comprising the steps of feeding the composition to be devolatilized into the inlet for the composition to be devolatilized of the devolatilization apparatus in accordance with any of claims 1 to 11, of withdrawing gas from the outlet for gas and of withdrawing devolatilized composition from the outlet for devolatilized composition.

15. The method in accordance with claim 14, wherein the composition to be devolatilized is selected from the group consisting of polycaprolactones, polyolefin elastomers, polylactic acids, polyglycolic acids, polyolefins and mixtures or copolymers of two or more of the above polymers.
